# EUROPÄISCHE PATENTSCHRIFT

(11) **EP 4 123 600 B1**
(45) Veröffentlichungstag und Bekanntmachung des Hinweises auf die Patenterteilung: **28.10.2026**
(21) Anmeldenummer: 22185882.2
(22) Anmeldetag: 20.07.2022
(51) Int. Cl.: G06V 20/69, G01N 15/1433, G01N 15/1429, G01N 15/1434

(54) **VERFAHREN ZUM ERFASSEN EINES PARTIKELS IN EINEM MIT FLÜSSIGKEIT GEFÜLLTEN BEHÄLTNIS**
METHOD FOR DETECTING A PARTICLE IN A CONTAINER FILLED WITH LIQUID
PROCÉDÉ DE DÉTECTION D'UNE PARTICULE DANS UN RÉCIPIENT REMPLI DE LIQUIDE

(30) Priorität: 20.07.2021 LU 500454
(43) Veröffentlichungstag der Anmeldung: 25.01.2023
(73) Patentinhaber: CYTENA GMBH, 79106 Freiburg (DE)
(72) Erfinder: LAUTSCHAM, Lena, 79106 Freiburg (DE); MORONI, Riko, 79106 Freiburg (DE); SIBER, Clara, 79106 Freiburg (DE); RIBA, Julian, 79106 Freiburg (DE)
(74) Vertreter: Grabovac, Dalibor

(56) Entgegenhaltungen:
- EP-A1- 3 260 870
- US-A1- 2020 057 880

## Beschreibung

Die Erfindung betrifft ein Verfahren zum Erfassen eines Partikels in einem mit Flüssigkeit gefüllten Behältnis. Darüber hinaus betrifft die Erfindung eine Dispensiervorrichtung. Außerdem betrifft die Erfindung ein Computerprogramm, einen Datenträger und ein Datenträgersignal.

Aus dem Stand der Technik ist bekannt, dass Wirkstoffe, wie beispielsweise monoklonale Antikörper und andere Proteine mit Hilfe sogenannter monoklonaler Zelllinien hergestellt werden. Dies sind Populationen aus Zellen, die alle von einer einzelnen Mutterzelle abstammen. Das Herstellen von monoklonalen Zelllinien ist notwendig, da nur so sichergestellt werden kann, dass alle Zellen der Population ein Annähernd gleiches Genom haben, um die Wirkstoffe zu erzeugen.

Um eine monoklonale Zelllinie zu erzeugen, werden Zellen einzeln in Behältnisse einer Mikrotiterplatte überführt. Die überführten Zellen werden hergestellt, indem eine Host-Zelllinie genetisch verändert wird und diese veränderten Zellen vereinzelt werden. Das Ablegen einzelner Zellen in die Mikrotiterplatten geschieht durch beispielsweise Freistrahldruckmethoden oder Pipettieren.

Danach werden Zellkolonien, die aus einer Zelle wachsen, in den Behältnissen der Mikrotiterplatte statisch, das heißt ohne Bewegung, kultiviert, bis sie fast den gesamten Boden der Behältnisse der Mikrotiterplatte bedecken. Anschließend werden die Zellkulturen schrittweise in größere Gefäße überführt. Insbesondere werden die Zellkulturen in unterschiedlich große Mikrotiterplatten und im Anschluss daran in einen Schüttelkolben und letztendlich in den Bioreaktor überführt. Typischerweise wird beim Schüttelkolben von statischer Kultur zu dynamischer Kultur gewechselt, das heißt, dass die Schüttelkolben kontinuierlich geschüttelt werden, um die Zellkultur zu mischen. Schlussendlich wird aus einer Serie von vielen hundert bis tausend solcher Zellkulturen diejenige in die Produktion überführt, die die Wirkstoffe am stabilsten und in größter Menge in einem Bioreaktor herstellen kann.

Aus biologischen und regulatorischen Gründen muss nachgewiesen werden, dass die Zelllinien klonal sind, also von einer Mutterzelle abstammen. Aus dem Stand der Technik sind Ausführungen bekannt, bei denen geprüft wird, ob eine Zelle an einem Behältnisboden angeordnet ist. Somit muss bei den bekannten Verfahren abgewartet werden, bis die Zelle an den Boden sedimentiert. Da im Laborbetrieb Probeträger mit einer Vielzahl von Behältnissen eingesetzt werden, dauert es sehr lange, bis für jedes Behältnis des Probenträgers geprüft ist, ob eine Zelle in das jeweilige Behältnis dispensiert wurde.

EP 3 260 870 A1 offenbart eine Vorrichtung zum Detektieren von Zellen oder Partikeln in einem Fluidbehälter. Die Vorrichtung weist einen Dispenser, der ausgelegt ist, um zumindest eine Zelle oder zumindest einen Partikel in ein definiertes Teilvolumen eines Fluids abzugeben, mit dem der Fluidbehälter zumindest teilweise gefüllt ist, und eine Detektionsvorrichtung auf, die ausgelegt ist, um zeitlich koordiniert mit der Abgabe der zumindest einen Zelle oder des zumindest einen Partikels durch den Dispenser eine Detektion in dem definierten Teilvolumen durchzuführen, um die zumindest eine Zelle oder den zumindest einen Partikel beim Eintritt in das Fluid oder unmittelbar nach dem Eintritt in das Fluid zu erfassen.

Die Aufgabe der Erfindung besteht daher darin, ein Verfahren bereitzustellen, mittels dem schnell geprüft werden kann, ob ein Partikel in ein Behältnis dispensiert wurde.

Die Aufgabe wird gelöst durch ein Verfahren zum Erfassen eines Partikels in einem mit Flüssigkeit gefüllten Behältnis nach Anspruch 1- Das Verfahren weist folgende Schritte auf:
Dispensieren einer flüssigen Probe in das Behältnis,
Scannen eines Teilvolumenbereichs des Behältnisses, um ein in der flüssigen Probe befindliches Partikel zu erfassen, dadurch gekennzeichnet, dass
eine obere Grenze und eine untere Grenze des Teilvolumenbereichs in einem dem Dispensiervorgang vorgeschalteten Kalibrierbetrieb ermittelt wird.

Darüber hinaus besteht eine Aufgabe der Erfindung darin, eine Dispensiervorrichtung bereitzustellen, mittels der schnell geprüft werden kann, ob ein Partikel in ein Behältnis dispensiert wurde.

Die Aufgabe wird gelöst durch eine Dispensiervorrichtung nach Anspruch 10 gelöst. Die Dispensiervorrichtung weist einen Dispenser zum Dispensieren einer flüssigen Probe in ein mit Flüssigkeit gefülltes Behältnis und eine Erfassungseinrichtung zum Scannen eines Teilvolumenbereichs des Behältnisses auf, um ein in der flüssigen Probe befindliches Partikel zu erfassen, und ist dadurch gekennzeichnet, dass die Erfassungseinrichtung eine obere Grenze und eine untere Grenze des Teilvolumenbereichs in einem dem Dispensiervorgang vorgeschalteten Kalibrierbetrieb ermittelt.

Erfindungsgemäß wurde erkannt, dass es vorteilhaft ist, wenn der in einem Dispensierbetrieb zu scannende Teilvolumenbereich des Behältnisses vorab, also zeitlich vor dem Dispensierbetrieb, in einem Kalibrierbetrieb bestimmt wird. Dies bietet den Vorteil, dass im Dispensierbetrieb bei einem Dispensiervorgang in das Behältnis schnell bestimmt werden kann, ob ein Partikel in das Behältnis dispensiert wurde. Die schnelle Bestimmung ist möglich, weil im Dispensierbetrieb nur der Teilvolumenbereich gescannt werden muss. Wie nachfolgend detaillierter erläutert ist, umfasst der Teilvolumenbereich des Behältnisses den Flüssigkeitsbereich, in dem sich ein in das Behältnis dispensiertes Partikel befindet. Somit muss zum Bestimmen des Vorliegens des Partikels in dem Behältnis nicht der gesamte Flüssigkeitsbereich abgescannt werden, was zeit- und speicheraufwendig ist. Darüber hinaus muss nicht gewartet werden, bis das Partikel auf den Boden sedimentiert, womit ein schnelles prüfen, ob ein Partikel in das Behältnis eingebracht ist, ermöglicht wird.

Ein weiterer Vorteil der Erfindung besteht darin, dass ein Teilvolumenbereich des Behältnisses, der zumindest teilweise die Flüssigkeit umfasst, gescannt wird. Wie nachfolgend näher beschrieben ist, kann der Teilvolumenbereich des Behältnisses auch einen Bereich aufweisen, in dem sich keine Flüssigkeit befindet. Dies ist vorteilhaft, weil nicht mehr eine Flüssigkeitsoberfläche bestimmt werden muss. Ein Bestimmen der Flüssigkeitsoberfläche ist aufgrund von Pipettierfehlern und/oder Meniskus-Effekten und/oder der speziellen Form des Behältnisses oftmals nur ungenau möglich und ist zeitaufwendig. Im Ergebnis kann das Bestimmen des Vorliegens des Partikels in dem Flüssigkeitsbereich schnell erfolgen. Außerdem kann der Teilvolumenbereich automatisch bestimmt werden.

Die flüssige Probe kann eine Flüssigkeit und biologische Partikel aufweisen. Die biologischen Partikel können Mikroorganismen wie Bakterien, Archaean, Hefen, Pilze, und Viren oder Zellen, DNA, RNA oder Proteine sein. Die flüssige Probe kann ein einziges oder mehrere der zuvor genannten biologischen Partikel aufweisen. Dabei kann die Flüssigkeit eine Zellsuspension sein, die ein Wachstum der in der Flüssigkeit angeordneten Zellen fördern kann. Alternativ kann das Partikel ein Glas- oder Polymerkügelchen sein und im Wesentlichen das gleiche Volumen aufweisen wie eine Zelle. Die Flüssigkeit der flüssigen Probe kann die gleiche Flüssigkeit sein, die in dem Behältnis angeordnet ist.

Die mittels der Vorrichtung ausgegebene flüssige Probe kann ein, insbesondere frei fliegender, Tropfen sein. Der flüssige Tropfen kann ein Volumen in einem Bereich zwischen 1 pl (Pikoliter) bis 1 µL (Mikroliter) aufweisen. Dabei kann die Probenausgabe nach einer Drop-on-Demand Betriebsweise ausgeführt werden. Bei dieser erfolgen durch die Dispensiervorrichtung eine diskrete und keine kontinuierliche Probenausgabe. Zum Realisieren der Drop-on-Demand Betriebsweise kann die Dispensiervorrichtung ein Betätigungsmittel aufweisen, das beispielsweise ein piezoelektrisch betriebener Aktor sein kann. Die Vorrichtung kann einen Abschnitt, insbesondere eine mechanische Membran, aufweisen, die durch ein Betätigungsmittel betätigbar ist. Bei einer Betätigung des Betätigungsmittels wird die flüssige Probe, insbesondere ein Tropfen, aus dem Dispenser ausgestoßen.

Die aus der Dispensiervorrichtung ausgegebene flüssige Probe kann Flüssigkeit und kein Partikel aufweisen. Alternativ kann die ausgegebene flüssige Probe Flüssigkeit und ein einziges Partikel aufweisen. Darüber hinaus kann die ausgegebene flüssige Probe Flüssigkeit und mehr als ein einziges Partikel aufweisen.

Als Scannen wird ein Vorgang verstanden, bei dem eine Vielzahl von Bildern aufgenommen werden. Die Bilder decken einen Teilvolumenbereich ab. Die einzelnen Bildebenen sind versetzt zueinander angeordnet. Insbesondere sind die Bildebenen in einer Raumrichtung, insbesondere einer zu einem Behältnisboden senkrechten Raumrichtung, versetzt zueinander angeordnet. Dabei werden die Bildebenen derart gelegt, dass sie nah genug beieinander liegen, damit alle Partikel erfasst werden können.

Der Teilvolumenbereich umfasst nur einen Teil des Behältnisses. Dabei ist der Teilvolumenbereich versetzt zu einem Behältnisboden angeordnet. Der Teilvolumenbereich kann in einer Raumrichtung, insbesondere einer zu dem Behältnisboden senkrechten Raumrichtung, versetzt zu dem Behältnisboden angeordnet sein. Der Teilvolumenbereich kann in einer Behältnisquerschnittebene, die senkrecht zu der zuvor genannten Raumrichtung ist, das gesamte Behältnis umfassen. Alternativ kann der Teilvolumenbereich in der Behältnisquerschnittebene nur einen Teil des Behältnisses umfassen. Dies bietet den Vorteil, dass der Rechenaufwand zum Ermitteln des Partikels gering ist.

Als obere und untere Grenze wird die Begrenzung des Teilvolumenbereichs in einer Raumrichtung verstanden. So ist die obere Grenze entlang einer Raumrichtung, insbesondere einer zum Behältnisboden senkrechten Raumrichtung, versetzt zu der unteren Grenze angeordnet. Dabei verläuft eine die obere Grenze enthaltene obere Ebene parallel zu einer die untere Grenze enthaltenen unteren Ebene. Die obere und untere Ebene können parallel zu einem Behältnisboden verlaufen. Dabei ist die untere Ebene näher zum Behältnisboden angeordnet als die obere Ebene.

Die Erfassungseinrichtung kann eine Abbildungsvorrichtung, wie beispielsweise eine Kamera, aufweisen, um Bilder aufzunehmen. Darüber hinaus kann die Erfassungseinrichtung eine Auswertevorrichtung aufweisen, mittels der die aufgenommenen Bilder ausgewertet werden. So kann die Auswertevorrichtung die Anzahl der im Teilvolumenbereich befindlichen Partikel bestimmen. Die Auswertevorrichtung kann ein Prozessor sein oder einen Prozessor aufweisen.

Bei einer besonderen Ausführung kann im Kalibrierbetrieb eine Flüssigkeitsoberfläche und/oder eine Querschnittsfläche des Behältnisses, insbesondere durch die Erfassungsvorrichtung, ermittelt werden. Die Querschnittsfläche kann durch einen Benutzer der Dispensiervorrichtung eingegeben werden und/oder ist in der Dispensiervorrichtung hinterlegt. So ist die Querschnittsfläche der Behältnisse bei einer Vielzahl von Probenträgern bekannt. Gleichermaßen kann die in das Behältnis eingegebene Flüssigkeitsmenge durch einen Benutzer der Dispensiervorrichtung eingegeben werden. Die Flüssigkeitsoberfläche kann durch einen Algorithmus, insbesondere der in der Auswertevorrichtung ausgeführt wird, ermittelt werden.

Darüber hinaus kann im Kalibrierbetrieb der Behältnisboden ermittelt werden. Der Behältnisboden kann durch ein Autofokus-Verfahren der Erfassungseinrichtung ermittelt werden. Alternativ oder zusätzlich kann der Behältnisboden durch ein nachstehend näher beschriebenen Scanvorgang ermittelt werden, bei dem eine Vielzahl von Bildern aufgenommen werden. Durch Kenntnis des Behältnisbodens kann die Flüssigkeitsoberfläche einfach bestimmt werden.

Die Dispensiervorrichtung kann eine Steuervorrichtung aufweisen. Die Steuervorrichtung kann ein Scannen eines Behältnisbereichs veranlassen. Der Behältnisbereich umfasst einen Bereich von einem Behältnisboden zu der Flüssigkeitsoberfläche. Alternativ kann der Behältnisbereich einen Bereich von einem Behältnisboden zu einer oberen Begrenzung aufweisen, die um einen vorgegebenen Sicherheitsabstand zu der Flüssigkeitsoberfläche versetzt angeordnet ist. Dies bietet den Vorteil, dass die Flüssigkeitsoberfläche nicht genau bestimmt werden muss. Darüber hinaus kann ein Bereich gescannt werden, der unterhalb eines Behältnisbodens ist. Dies bietet den Vorteil, dass ein Behältnisboden nicht bestimmt werden muss. Die Auswertevorrichtung kann durch Auswerten dieser Bilder und der Bilder des Behältnisbereichs den Behältnisboden ermitteln.

Die Steuervorrichtung kann veranlassen, dass im Kalibrierbetrieb der Behältnisbereich vor einem Dispensieren der flüssigen Probe gescannt wird. Somit werden mehrere Hintergrundbilder des Behältnisbereichs aufgenommen. Diese Hintergrundbilder können bei einer anschließenden Erfassung eines Partikels in dem Teilvolumenbereich verwendet werden.

Darüber hinaus kann die Steuervorrichtung veranlassen, dass beim Kalibrierbetrieb eine flüssige Probe dispensiert wird, die ein Partikel aufweist. Das Partikel kann dispensiert werden, nachdem die Hintergrundbilder aufgenommen wurden. Das Partikel kann analog zu dem im Dispensierbetrieb dispensierten Partikel ein biologisches Partikel sein.

Dabei kann im Kalibrierbetrieb eine flüssige Probe in wenigstens ein Behältnis eines Probenträgers dispensiert werden, der mehrere Behältnisse aufweist. Das Partikel wird im Kalibrierbetrieb in ein anderes Behältnis dispensiert als ein Partikel in einem Dispensierbetrieb. Als Dispensierbetrieb wird ein Betrieb der Dispensiervorrichtung verstanden, bei dem ein oder mehrere Dispensiervorgänge durchgeführt werden, wobei in jedem der Dispensiervorgänge die Erfassungseinrichtung den im Kalibrierbetrieb ermittelten Teilvolumenbereich oder, wie nachstehend näher erläutert ist, einen angepassten Teilvolumenbereich scannt. Die Steuervorrichtung kann veranlassen, dass das Kalibrierverfahren durchgeführt wird, wenn ein Probenträger mit mehreren Behältnissen in die Dispensiervorrichtung eingesetzt wird.

Wie oben beschrieben ist, ist es üblich, dass flüssige Proben in eine Vielzahl von Behältnissen eines Probenträgers dispensiert werden. Dabei wird bei wenigstens einem Dispensiervorgang der zeitaufwendige Kalibrierbetrieb durchgeführt, um den Teilvolumenbereich zu ermitteln. Dieser Teilvolumenbereich wird dann für die anderen Dispensiervorgänge in wenigstens einem Teil der Behältnisse herangezogen. In allen Fällen kann die Steuervorrichtung veranlassen, dass die flüssige Probe dispensiert wird und/oder dass ein Scanvorgang durch die Erfassungseinrichtung durchgeführt wird.

Insbesondere kann die Steuervorrichtung im Kalibrierbetrieb veranlassen, dass die Erfassungseinrichtung den Behältnisbereich scannt. Dabei wird eine Vielzahl von Bildern vom Behältnisbereich erzeugt. Diese Bilder enthalten auch das dispensierte Partikel. Die Erfassungseinrichtung kann unter Verwendung der aufgenommenen Bilder und der aufgenommenen Hintergrundbilder das Partikel erfassen. Dazu können die aufgenommenen Hintergrundbilder und Bilder miteinander verglichen werden. Im Ergebnis wird auf einfache Weise bestimmt, ob in dem Teilvolumenbereich ein Partikel angeordnet ist oder nicht.

Die Erfassungseinrichtung erfasst im Kalibrierbetrieb eine Position des Partikels, insbesondere eine Höhe des Partikels. Als Höhe wird der Abstand des Partikels zu einem Behältnisboden entlang einer zum Behältnisboden senkrechten Raumrichtung verstanden. Die Erfassungseinrichtung ermittelt die obere Grenze und die untere Grenze auf der Basis der erfassten Position des Partikels. So ist die obere Grenze um einen vorgegebenen ersten Abstand und die untere Grenze um einen vorgegebenen zweiten Abstand von der Position des Partikels versetzt angeordnet. Dabei ist die obere Grenze entlang einer Raumrichtung, insbesondere einer Raumrichtung, die senkrecht zum Behältnisboden ist, versetzt zu dem Partikel angeordnet. Die untere Grenze ist in entgegengesetzter Richtung zu der oberen Grenze entlang der Raumrichtung versetzt zu dem Partikel angeordnet.

Der zweite Abstand kann größer sein als der erste Abstand. Alternativ können der erste und zweite Abstand den gleichen Wert haben. Die Werte für den ersten Abstand und den zweiten Abstand können durch einen Benutzer der Dispensiervorrichtung vorgegeben werden. Der ermittelte Teilvolumenbereich kann bei wenigstens einem Teil der dem Kalibrierverfahren nachgeschalteten Dispensiervorgängen herangezogen werden. Im Ergebnis ist ein automatisiertes Bestimmen des relevanten Teilvolumenbereichs möglich, in welchem sich das Partikel nach dem Dispensieren in das Behältnis befindet.

Wie oben beschrieben ist, veranlasst die Steuervorrichtung, dass der Dispenser eine flüssige Probe dispensiert und dass die Erfassungseinrichtung einen Scanvorgang im Kalibrierbetrieb und/oder im Dispensierbetrieb durchführt. Dabei kann die Steuervorrichtung veranlassen, dass die Erfassungseinrichtung zeitgleich mit dem Dispensiervorgang mit dem Scanvorgang beginnt. Alternativ kann eine gewisse Zeitdauer gewartet werden, bis mit dem Scanvorgang begonnen wird. Diese Zeitdauer berücksichtigt dann, dass die dispensierte flüssige Probe eine gewisse Zeit benötigt, bis sie auf die im Behältnis befindliche Flüssigkeit trifft.

Bei einem Dispensierbetrieb kann die Steuervorrichtung veranlassen, dass nach einer vorgegebenen Anzahl an Dispensiervorgängen die Position des Partikels ermittelt wird. Alternativ kann die Position des Partikels bei jedem Dispensiervorgang ermittelt werden. Die Erfassungseinrichtung kann bei mehreren Dispensiervorgängen in mehrere Behältnisse die Position des Partikels in dem jeweiligen Behältnis bestimmen. Dabei kann die Steuervorrichtung veranlassen, dass der Teilvolumenbereich angepasst, insbesondere verkleinert, wird, wenn die Partikel in den jeweiligen Behältnissen die gleiche Position oder eine Position in einem vorgegebenen Bereich haben. Der vorgegebene Bereich ist kleiner als der Teilvolumenbereich. Dies bietet den Vorteil, dass die Bestimmung, ob das Partikel in dem Behältnis angeordnet schnell erfolgen kann, weil die Anzahl der aufzunehmenden und auszuwertenden Bilder von der Größe des Teilvolumenbereichs abhängt.

Bei einer besonderen Ausführung kann die Erfassungseinrichtung prüfen, ob sich das Partikel in dem Teilvolumenbereich befindet. Diese Prüfung kann bei jedem Dispensiervorgang erfolgen. Die Steuervorrichtung kann veranlassen, dass der zu scannende Teilvolumenbereich vergrößert wird, wenn sich das Partikel außerhalb des Teilvolumenbereichs befindet. Insbesondere kann in solchen Fällen der Behältnisbereich gescannt werden, um zu ermitteln, ob das Partikel in das Behältnis dispensiert wurde. Dadurch wird vermieden, dass ein in das Behältnis dispensiertes Partikel nicht erfasst wird.

Darüber hinaus kann die Steuervorrichtung veranlassen, dass ein Kalibrierbetrieb erneut eingeleitet wird, wenn sich das Partikel außerhalb des Teilvolumenbereichs befindet. Alternativ oder zusätzlich kann die Steuervorrichtung veranlassen, dass der Kalibrierbetrieb nach einer vorgegebenen Anzahl an Dispensiervorgängen erneut eingeleitet wird. In allen Fällen wird der Teilvolumenbereich erneut bestimmt, der bei den nachfolgenden Dispensiervorgängen im Dispensierbetrieb verwendet wird.

Die Erfassungseinrichtung kann die Anzahl der Partikel im Teilvolumenbereich ermitteln. Dabei kann für den Fall, dass die Erfassungseinrichtung eine vorgegebene Anzahl an Partikeln, insbesondere ein einziges Partikel, im Teilvolumenbereich ermittelt, der Erfassungsvorgang abgeschlossen und ein neuer Dispensiervorgang in ein neues Behältnis erfolgen. Für den Fall, dass kein Partikel in dem Teilvolumenbereich angeordnet ist, kann, wie oben bereits beschrieben ist, der Teilvolumenbereich erweitert und/oder ein neuer Kalibrierbetrieb eingeleitet werden. Sollte die in dem Teilvolumenbereich befindliche Anzahl an Partikeln größer sein als die vorgegebene Anzahl an Partikeln, wird der Erfassungsvorgang beendet und es erfolgt ein neuer Dispensiervorgang in ein neues Behältnis. Jedoch wird in einem Speicher hinterlegt, dass das Behältnis für weitere Analyse- und/oder Untersuchungsvorgänge nicht herangezogen werden soll.

Von besonderem Vorteil ist eine Vorrichtung, die Mittel aufweist, mittels denen ein erfindungsgemäßes Verfahren ausgeführt werden kann. Außerdem ist ein Computerprogramm von besonderem Vorteil, das Befehle umfasst, die bei der Ausführung des Programms durch einen Computer diesen veranlassen, das erfindungsgemäße Verfahren durchzuführen. Außerdem ist ein Datenträger vorteilhaft, auf dem das erfindungsgemäße Computerprogramm gespeichert ist. Darüber hinaus ist ein Datenträgersignal von Vorteil, das ein erfindungsgemäßes Computerprogramm überträgt.

In den Figuren ist der Erfindungsgegenstand schematisch dargestellt, wobei gleiche oder gleichwirkende Elemente zumeist mit denselben Bezugszeichen versehen sind. Dabei zeigt:
- Fig. 1: eine erfindungsgemäße Dispensiervorrichtung mit einem Probenträger mit mehreren Behältnissen,
- Fig. 2a-2e:: eine Seitenansicht auf ein Behältnis zum Erläutern der einzelnen Schritte des Kalibrierbetriebs,
- Fig. 3: ein Ablaufdiagramm eines Kalibrierbetriebs und
- Fig. 4: eine Ablaufdiagramm eines Dispensierbetriebs.

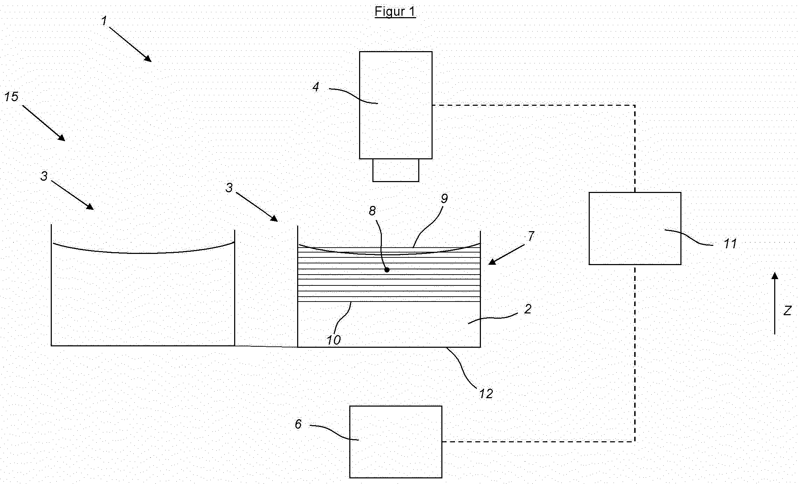

Eine in Figur 1 gezeigte Dispensiervorrichtung 1 weist einen Dispenser 4 zum Dispensieren einer flüssigen Probe 5 in ein Behältnis 3 auf. Darüber hinaus weist die Dispensiervorrichtung 1 eine Erfassungseinrichtung 6 zum Scannen eines Teilvolumenbereichs 7 des Behältnisses 3, um ein in der flüssigen Probe befindliches Partikel 8 zu erfassen. Die dispensierte flüssige Probe 5 kann kein Partikel 8, ein einziges Partikel oder mehrere Partikel enthalten. Dementsprechend wird die Erfassungseinrichtung 6 nach einem dispensieren der flüssigen Probe 4 kein Partikel, ein einziges Partikel oder mehrere Partikel im Teilvolumenbereich 7 erfassen.

Das Behältnis 3 ist mit einer Flüssigkeit 2 wenigstens teilweise gefüllt. Die Dispensiervorrichtung 1 weist außerdem eine Steuervorrichtung 11 auf, die mit dem Dispenser 4 und der Erfassungseinrichtung 6 elektrisch verbunden ist. Die elektrische Verbindung ist in Figur 1 gestrichelt dargestellt.

Figur 1 zeigt einen Zustand zu einem Zeitpunkt, nachdem ein Dispensiervorgang erfolgt ist. Dabei ist die ausgegebene flüssige Probe 5, die ein Partikel 8 enthält, bereits in die im Behältnis 3 befindliche Flüssigkeit gefallen. Aus Figur 1 ist ersichtlich, dass sich das Partikel 8 im Teilvolumenbereich 7 befindet.

Die Erfassungseinrichtung 7 weist eine Abbildungseinrichtung auf, mittels der eine Vielzahl von Bildern im Teilvolumenbereich 7 aufgenommen werden. Im Ergebnis bilden die Bilder den Teilvolumenbereich 7 ab. Da das Partikel 8 im Teilvolumenbereich 7 angeordnet ist, kann das Partikel 8 erfasst werden. In Figur 1 sind die Bildebenen im Teilvolumenbereich 7 gezeigt, in denen jeweils ein Bild aufgenommen wird. Die Bildebenen sind entlang einer Raumrichtung Z versetzt zueinander angeordnet. Dabei steht die Raumrichtung Z senkrecht zu dem Behältnisboden 12. Die untere Grenze 10 des Teilvolumenbereichs ist zu dem Behältnisboden 12 näher angeordnet als die obere Grenze 9 des Teilvolumenbereichs 7. Der Teilvolumenbereich 7 ist entlang der Raumrichtung Z versetzt zu dem Behältnisboden 12 angeordnet.

Ein Probenträger 15, der beispielsweise eine Mikrotiterplatte ist, weist mehrere Behältnisse 3 auf. Dabei sind der Dispenser 4 und der Probenträger 15 jeweils derart zueinander platziert, dass der Dispenser 4 eine flüssige Probe 5 in das Behältnis 3 dispensiert.

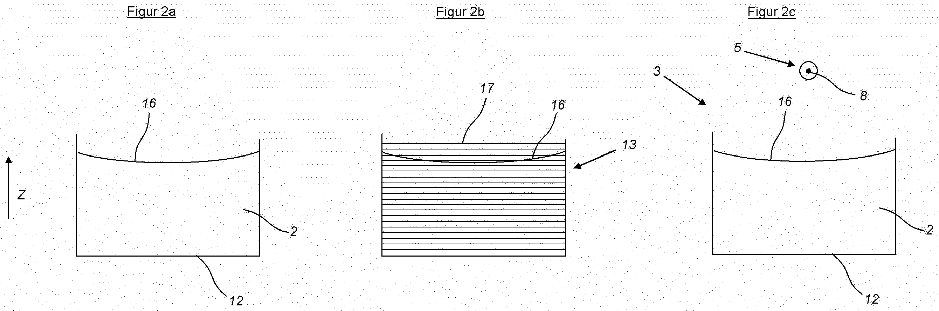

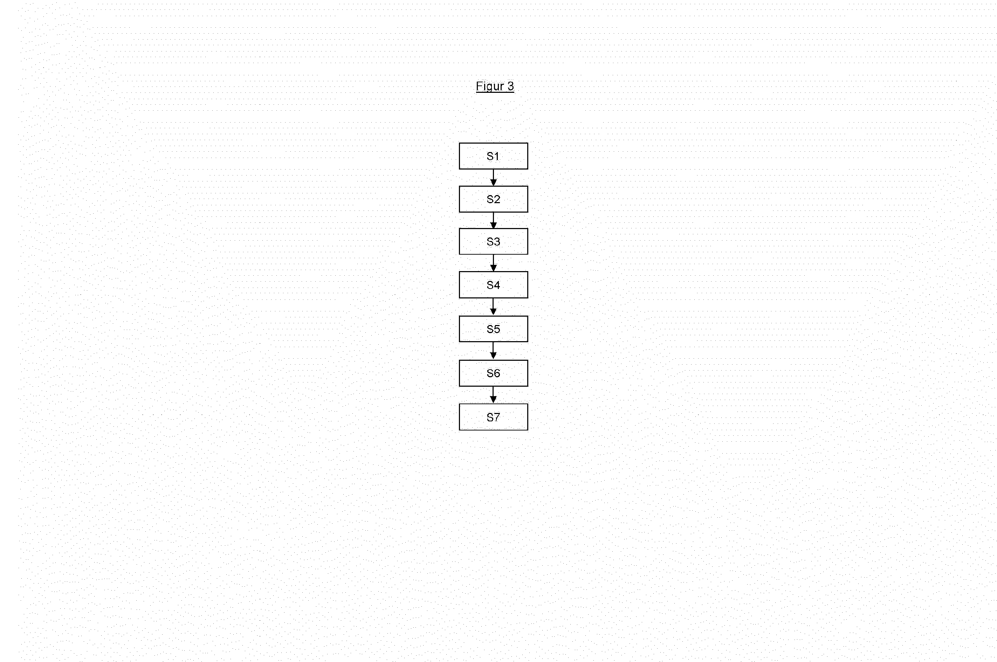

Die Erfassungseinrichtung 6 bestimmt die obere Grenze 9 und die untere Grenze 10 des Teilvolumenbereichs 7 in einem dem Dispensierbetrieb vorgeschalteten Kalibrierbetrieb. Der Kalibrierbetrieb kann bei einem Behältnis 3 oder bei mehreren Behältnissen 3 des Probenträgers 15 ausgeführt werden. Der Kalibrierbetrieb wird unter Verwendung der Fig. 2a bis 2e und des in Figur 3 gezeigten Ablaufdiagramms erläutert.

Der Kalibrierbetrieb wird in einem ersten Schritt S1 eingeleitet. Die Einleitung erfolgt, nachdem ein Probenträger 15, das mehrere Behältnisse enthält, in die Dispensiervorrichtung 1 eingelegt ist. Insbesondere kann der Kalibrierbetrieb bei einem ersten Dispensiervorgang in ein Behältnis 3 des Probenträgers 15 durchgeführt werden. Die anschließenden Dispensiervorgänge können dann entsprechend dem in Figur 3 dargestellten Ablaufdiagramm ausgeführt werden.

Nach Einleiten des Kalibrierbetriebs in dem ersten Schritt S1 wird in einem zweiten Schritt S2 der Behältnisboden 12 und eine Flüssigkeitsoberfläche 16 der in dem Behältnis 3 befindlichen Flüssigkeit 2 ermittelt. Der Behältnisboden 12 kann durch einen Autofokus der Erfassungseinrichtung 6 erfolgen. Die Flüssigkeitsoberfläche 16 kann basierend auf der Eingabe des Benutzers der Dispensiervorrichtung 1 zur in das Behältnis eingebrachten Flüssigkeitsmenge bestimmt werden. Darüber hinaus kann der Benutzer eine Behältnisquerschnittfläche eingeben, die ebenfalls für die Bestimmung der Flüssigkeitsoberfläche 16 herangezogen wird. Alternativ kann Behältnisquerschnittfläche automatisiert bestimmt werden. Die Bestimmung kann in der Auswertevorrichtung der Erfassungsvorrichtung 6 erfolgen. Dieser Vorgang ist in Figur 2a gezeigt.

Anschließend kann in einem dritten Schritt S3 ein Behältnisbereich 13 gescannt werden. Der Behältnisbereich 13 umfasst den gesamten Flüssigkeitsbereich. Zudem beinhaltet der Behältnisbereich 13 auch einen Teil, der keine Flüssigkeit aufweist. Dabei ist eine obere Begrenzung 17 des Behältnisbereichs 13 um einen vorgegebenen Abstand zu der Flüssigkeitsoberfläche 16 entlang der Raumrichtung Z versetzt angeordnet. Dieser Zustand ist in Figur 2b dargestellt. Im Ergebnis liegen nach dem dritten Schritt S3 eine Vielzahl von Hintergrundbildern vor, die das Behältnis ohne ein Partikel 8 zeigen.

Die Schritte S2 und S3 sind optional und dienen lediglich dazu, die Position des Partikels 8 präzise zu ermitteln. Mit anderen Worten, das Verfahren funktioniert ebenfalls, wenn nur die nachstehend näher beschriebenen Schritte S4 bis S8 ausgeführt werden.

In einem vierten Schritt S4, der in Figur 2c dargestellt ist, wird vom Dispenser 4 eine flüssige Probe 5 ausgegeben. Die flüssige Probe 5 weist ein Partikel 8 auf. Die flüssige Probe 5 fällt in die im Behältnis 2 befindliche Flüssigkeit 2.

In einem fünften Schritt S5 scannt die Erfassungseinrichtung 6 den Behältnisbereich 13. Der Behältnisbereich 13 weist vorzugsweise das gleiche Volumen auf wie der im dritten Schritt S3 gescannte Behältnisbereich 13. Alternativ kann der Behältnisbereich 13 einen größeren Bereich umfassen. So kann der Behältnisbereich 13 zusätzlich einen Abschnitt umfassen, der unterhalb des Behältnisbodens 12 angeordnet ist. Der Erfassungsvorgang erfolgt derart, dass die aufgenommenen Bilder den zuvor erzeugten Hintergrundbildern zugeordnet werden können. Insbesondere entspricht die Position der einzelnen Bildebenen der Position jeweils der Position der zugeordneten Hintergrundbilder.

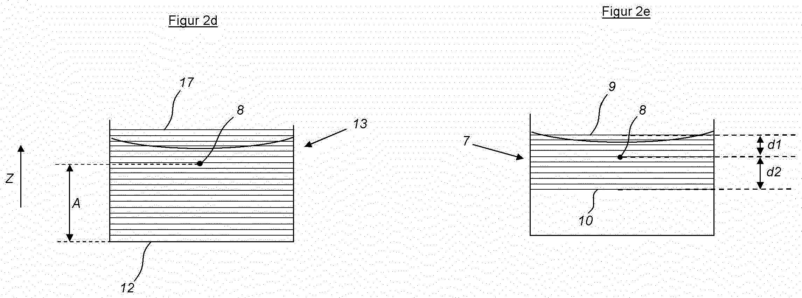

Anschließend bestimmt die Erfassungseinrichtung 6 in einem sechsten Schritt S6 die Position des Partikels 8 in dem Behältnis 3. Insbesondere wird die Position des Partikels 8 in der Raumrichtung Z erfasst. Dabei kann der Abstand des Partikels 8 vom Behältnisboden 12 entlang der Raumrichtung Z erfasst werden. Dieser Zustand ist in Figur 2d gezeigt. Zum Erfassen der Position des Partikels 8 in dem Behältnis 3 können die im fünften Schritt S5 erfassten Bilder mit den im dritten Schritt S3 erfassten Bildern verglichen werden.

In einem siebten Schritt S7 legt die Erfassungseinrichtung 6 die obere Grenze 9 und die untere Grenze 10 auf der Basis der bestimmten Position des Partikels 8 fest. Insbesondere legt die Erfassungseinrichtung fest, dass die obere Grenze 9 um einen ersten Abstand d1 entlang der Raumrichtung Z von dem Partikel 8 versetzt angeordnet ist. Die untere Grenze 10 ist entlang einer Raumrichtung Z um einen zweiten Abstand d2 versetzt zu dem Partikel 8 angeordnet. Dieser Zustand ist in Figur 2e dargestellt.

Somit steht nach dem achten Schritt S8 der Teilvolumenbereich 7 fest. Dieser Teilvolumenbereich 7 wird in wenigstens einem Teil der dem Kalibrierbetrieb zeitlich nachgeschalteten Dispensiervorgängen eines Dispensierbetriebs gescannt. In dem Dispensierbetrieb erfolgt, wie oben bereits beschrieben ist, ein Dispensieren einer flüssigen Probe 5 zum kontrollierten Isolieren einer bestimmten Anzahl an Partikeln.

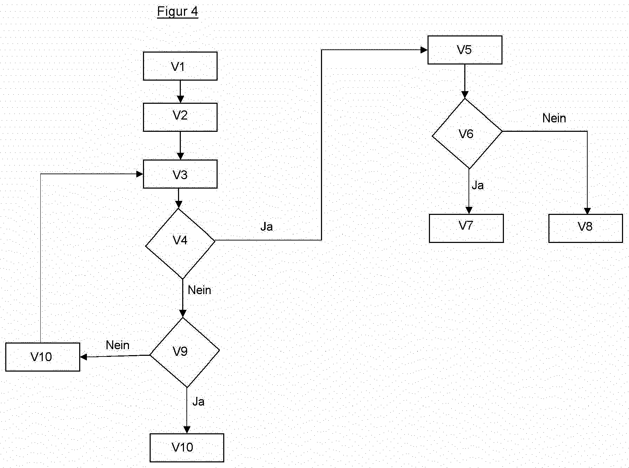

Figur 4 zeigt ein Ablaufdiagramm der Dispensiervorrichtung 1 in einem Dispensierbetrieb, wobei der Teilvolumenbereich 7 bereits in einem Kalibrierverfahren ermittelt wurde. In einem ersten Schritt V1 veranlasst die Steuervorrichtung 11, dass eine flüssige Probe 5 durch den Dispenser 4 dispensiert wird. Die Steuervorrichtung 11 informiert die Erfassungseinrichtung 6 über den Dispensiervorgang. Die Erfassungseinrichtung 6 kann in einem zweiten Schritt V2 nach Erhalt der Information von der Steuervorrichtung 11 gleich oder nach einer vorgegebenen Zeit mit dem Scannen des Teilvolumenbereich 7 beginnen.

In einem dritten Schritt V3 erfasst die Erfassungseinrichtung 6, die Anzahl der in dem Teilvolumenbereich 7 ermittelten Partikel 8. Dabei wird in einem vierten Schritt V4 geprüft, ob die Anzahl der in dem Teilvolumenbereich befindlichen Partikel 8 einer vorgegebenen Anzahl entspricht. Für den Fall, dass dies der Fall ist, wird in einem fünften Schritt V5 die Position des Partikels oder der Partikel ermittelt.

In einem sechsten Schritt V6 wird geprüft, ob die Position des Partikels 8 mit Positionen von Partikeln 8, die in vorherigen Dispensiervorgängen ermittelt wurden, übereinstimmt oder in einem vorgegebenen Bereich liegt. Ist dies der Fall wird der Teilvolumenbereich 7 im siebten Schritt V7 verkleinert und der Erfassungsvorgang beendet. Der verkleinerte Teilvolumenbereich 7 wird bei anschließenden Dispensiervorgängen verwendet. Dies bedeutet, dass die Erfassungseinrichtung 6 bei anschließenden Dispensiervorgängen den verkleinerten Teilvolumenbereich 7 scannt.

Sofern im sechsten Schritt V6 ermittelt wird, dass die Position des Partikels mit der Position von Partikeln aus vorherigen Dispensiervorgängen nicht übereinstimmt, wird der Erfassungsvorgang in einem achten Schritt V8 beendet. In anschließenden Dispensiervorgängen wird der gleiche Teilvolumenbereich 7 wie im zweiten Schritt V2 verwendet. Sowohl im siebten als auch achten Schritt wird nach einem Beenden des Erfassungsvorgangs der Dispenser 4 und/oder Probenträger 15 derart verfahren, dass ein Dispensieren in ein anderes Behältnis 3 möglich ist.

Für den Fall, dass in dem vierten Schritt V4 bestimmt wird, dass die Anzahl der im Teilvolumenbereich 7 befindlichen Partikel nicht der vorgegebenen Anzahl an Partikeln entspricht, wird im neunten Schritt V9 geprüft, ob in dem Teilvolumenbereich 7 mehr als die vorgegebene Anzahl an Partikel 8 angeordnet ist. Sofern dies der Fall ist, wird in der Erfassungsvorgang im Schritt V10 beendet.

Sofern im neunten Schritt V9 erfasst wird, dass kein Partikel in dem Teilvolumenbereich 7 angeordnet ist, wird im zehnten Schritt V10 der Teilvolumenbereich 7 vergrößert und der Scanvorgang wiederholt. Dabei scannt die Erfassungsvorrichtung 6 den vergrößerten Teilvolumenbereich 7 und die Schritte V3 bis V9 werden wiederholt.

## Patentansprüche

1. Verfahren zum Erfassen eines Partikels (8) in einem mit Flüssigkeit (2) gefüllten Behältnis (3), wobei das Verfahren folgende Schritte aufweist:
Dispensieren einer flüssigen Probe (5) in das Behältnis (4),
Scannen eines Teilvolumenbereichs (7) des Behältnisses (3), um ein in der flüssigen Probe (5) befindliches Partikel (8) zu erfassen, wobei beim Scannen eine Vielzahl von Bildern aufgenommen werden, **dadurch gekennzeichnet, dass**
eine obere Grenze (9) und eine untere Grenze (10) des Teilvolumenbereichs (7) in einem dem Dispensiervorgang vorgeschalteten Kalibrierbetrieb ermittelt wird, wobei im Kalibrierbetrieb eine Position des, insbesondere in der dispensierten flüssigen Probe (5) enthaltenen, Partikels (8), insbesondere eine Höhe des Partikels (8), ermittelt wird und dass im Kalibrierbetrieb festgelegt wird, dass die obere Grenze (9) um einen vorgegebenen ersten Abstand (d1) und die untere Grenze (10) um einen vorgegebenen zweiten Abstand (d2) von der Position des Partikels (8) versetzt angeordnet ist.

2. Verfahren nach Anspruch 1, **dadurch gekennzeichnet, dass**
a. im Kalibrierbetrieb eine Flüssigkeitsoberfläche (16) und/oder eine Querschnittsfläche des Behältnisses (3) ermittelt wird und/oder dass
b. im Kalibrierbetrieb ein Behältnisboden (12) ermittelt wird und/oder dass
c. im Kalibrierbetrieb ein Behältnisbereich (13) gescannt wird oder dass im Kalibrierbetrieb ein Behältnisbereich (13) gescannt wird, wobei beim Scannen mehrere Hintergrundbilder des Behältnisbereichs (13) aufgenommen werden.

3. Verfahren nach Anspruch 1 oder 2, **dadurch gekennzeichnet, dass**
a. im Kalibrierbetrieb eine flüssige Probe (5) dispensiert wird, die ein Partikel (8) aufweist, und/oder dass
b. der Kalibrierbetrieb durchgeführt wird, wenn ein Probenträger (15) mit mehreren Behältnissen (3) in eine Dispensiervorrichtung (1) eingesetzt wird, und/oder dass
c. im Kalibrierbetrieb eine flüssige Probe (5) in wenigstens ein Behältnis (3) eines Probenträgers (15) dispensiert wird, der mehrere Behältnisse (3) aufweist.

4. Verfahren nach Anspruch 3, **dadurch gekennzeichnet, dass**
a. der Behältnisbereich (13) nach dem Dispensieren der flüssigen Probe (5) gescannt wird oder dass
b. der Behältnisbereich (13) nach dem Dispensieren der flüssigen Probe (5) gescannt wird, wobei beim Scannen eine Vielzahl von Bildern vom Behältnisbereich (13) erzeugt werden.

5. Verfahren nach einem der Ansprüche 2 bis 4, **dadurch gekennzeichnet, dass**
a. der Behältnisbereich (13) einen Bereich von einem Behältnisboden (12) zu einer Flüssigkeitsoberfläche (16) aufweist oder dass
b. der Behältnisbereich (13) einen Bereich von einem Behältnisboden (12) zu einer oberen Begrenzung (17) aufweist, die um einen vorgegebenen Abstand zu einer Flüssigkeitsoberfläche (16) versetzt angeordnet ist.

6. Verfahren nach Anspruch 4 oder 5, **dadurch gekennzeichnet, dass** das Partikel (8) unter Verwendung der aufgenommenen Bilder und der aufgenommenen Hintergrundbilder erfasst wird.

7. Verfahren nach einem der Ansprüche 1 bis 6, **dadurch gekennzeichnet, dass** in einem Dispensierbetrieb die Position des, insbesondere in der dispensierten flüssigen Probe (5) enthaltenen, Partikels (8), insbesondere eine Höhe des Partikels (8), ermittelt wird, insbesondere und dass nach einer vorgegebenen Anzahl an Dispensiervorgängen die Position des Partikels (8) ermittelt wird oder dass bei jedem Dispensiervorgang die Position des Partikels (8) ermittelt wird.

8. Verfahren nach Anspruch 7, **dadurch gekennzeichnet, dass** geprüft wird, ob sich das Partikel (8) in dem Teilvolumenbereich (7) befindet, insbesondere und dass ein Kalibrierbetrieb erneut eingeleitet wird, wenn sich das Partikel (8) außerhalb des Teilvolumenbereichs (7) befindet und/oder dass der zu scannende Teilvolumenbereich (7) vergrößert wird, wenn sich das Partikel (8) außerhalb des Teilvolumenbereichs (7) befindet.

9. Verfahren nach einem der Ansprüche 1 bis 8, **dadurch gekennzeichnet, dass**
a. die Anzahl der Partikel (8) im Teilvolumenbereich (7) ermittelt wird und/oder dass
b. jeweils eine flüssige Probe (5) in mehrere Behältnisse dispensiert werden und die Position des Partikels (8) in dem jeweiligen Behältnis bestimmt wird, wobei der Teilvolumenbereich (7) verkleinert wird, wenn die Partikel (8) in den jeweiligen Behältnissen (3) die gleiche Position oder eine Position in einem vorgegebenen Bereich haben.

10. Dispensiervorrichtung (1) mit
einem Dispenser (4) zum Dispensieren einer flüssigen Probe (5) in ein mit Flüssigkeit (2) gefülltes Behältnis (3),
einer Erfassungseinrichtung (6) zum Scannen eines Teilvolumenbereichs (7) des Behältnisses (3), um ein in der flüssigen Probe (5) befindliches Partikel (8) zu erfassen, wobei die Erfassungseinrichtung (6) eine Vielzahl von Bildern aufnimmt, **dadurch gekennzeichnet, dass**
im Kalibrierbetrieb die Erfassungseinrichtung (6) eine Position des Partikels (8), insbesondere eine Höhe des Partikels (8), erfasst und
die Erfassungseinrichtung (6) eine obere Grenze (9) und eine untere Grenze (10) des Teilvolumenbereichs (7) in einem dem Dispensiervorgang vorgeschalteten Kalibrierbetrieb ermittelt, wobei die obere Grenze (9) um einen vorgegebenen ersten Abstand (d1) und die untere Grenze (10) um einen vorgegebenen zweiten Abstand (d2) von der Position des Partikels (8) versetzt angeordnet ist.

11. Dispensiervorrichtung (1) nach Anspruch 10, **dadurch gekennzeichnet, dass**
a. die Dispensiervorrichtung (1) eine Steuervorrichtung (11) aufweist, die einen Dispensiervorgang veranlasst und/oder die ein Scannen des Teilvolumenbereichs (7) des Behältnisses (3) veranlasst, und/oder dass
b. das Behältnis (3) Bestandteil eines Probenträgers (15) ist, der mehrere Behältnisse (3) aufweist, und/oder dass
c. im Kalibrierbetrieb die Erfassungseinrichtung (6) eine Flüssigkeitsoberfläche (16) und/oder eine Querschnittsfläche des Behältnisses (3) ermittelt und/oder dass
d. im Kalibrierbetrieb die Erfassungseinrichtung (6) einen Behältnisboden (12) ermittelt und/oder dass
e. im Kalibrierbetrieb die Erfassungseinrichtung (6) einen Behältnisbereich (13) scannt oder dass im Kalibrierbetrieb die Erfassungseinrichtung (6) einen Behältnisbereich (13) scannt, wobei beim Scannen mehrere Hintergrundbilder des Behältnisbereichs (13) aufgenommen werden, und/oder dass
f. im Kalibrierbetrieb der Dispenser (4) eine flüssige Probe (5) in das Behältnis (3) dispensiert, wobei die Erfassungseinrichtung (6) den Behältnisbereich (13) scannt und eine Vielzahl von Bildern des Behältnisbereichs (13) aufnimmt, insbesondere und dass die Erfassungseinrichtung (6) das Partikel (8) unter Verwendung der aufgenommenen Bilder und der aufgenommenen Hintergrundbilder erfasst.

12. Dispensiervorrichtung (1) nach Anspruch 10 der 11, **dadurch gekennzeichnet, dass**
a. die Steuervorrichtung (11) veranlasst, dass nach einer vorgegebenen Anzahl an Dispensiervorgängen die Position des Partikels (8) ermittelt wird oder dass bei jedem Dispensiervorgang die Position des Partikels (8) ermittelt wird, und/oder dass
b. die Erfassungseinrichtung (6) prüft, ob sich das Partikel (8) in dem Teilvolumenbereich (7) befindet, und/oder dass
c. die Steuervorrichtung (11) veranlasst, dass ein Kalibrierbetrieb erneut eingeleitet wird, wenn sich das Partikel (8) außerhalb des Teilvolumenbereichs (7) befindet, und/oder dass
d. die Steuervorrichtung (11) veranlasst, dass der zu scannende Teilvolumenbereich (7) vergrößert wird, wenn sich das Partikel (8) außerhalb des Teilvolumenbereichs (7) befindet, und/oder dass
e. die Erfassungseinrichtung (6) die Anzahl der Partikel (8) im Teilvolumenbereich (7) ermittelt und/oder dass
f. der Dispenser (4) jeweils eine flüssige Probe (5) in mehrere Behältnisse dispensiert und die Erfassungseinrichtung (6) die Position des Partikels (8) in dem jeweiligen Behältnis (3) bestimmt, wobei die Steuervorrichtung (11) veranlasst, dass der Teilvolumenbereich (7) verkleinert wird, wenn die Partikel (8) in den jeweiligen Behältnissen (3) die gleiche Position oder eine Position in einem vorgegebenen Bereich haben.

13. Computerprogramm, umfassend Befehle, die bei der Ausführung des Programms durch einen Computer diesen veranlassen, das Verfahren nach einem der Ansprüche 1 bis 9 durchzuführen.

14. Datenträger, auf dem das Computerprogramm nach Anspruch 13 gespeichert ist oder Datenträgersignal, das das Computerprogramm nach Anspruch 13 überträgt.

## Claims

1. A method for detecting a particle (8) in a container (3) filled with liquid (2), the method comprising the following steps:
dispensing a liquid sample (5) into the container (4),
scanning a partial volume region (7) of the container (3) in order to detect a particle (8) located in the liquid sample (5), wherein a plurality of images are recorded during scanning, **characterised in that**
an upper limit (9) and a lower limit (10) of the partial volume region (7) is determined in a calibration operation preceding the dispensing procedure, wherein in the calibration operation, a position of the particle (8), in particular contained in the dispensed liquid sample (5), in particular a height of the particle (8), is determined, and **in that** in the calibration operation, it is determined that the upper limit (9) is arranged offset by a predetermined first distance (d1) and the lower limit (10) by a predetermined second distance (d2) from the position of the particle (8).

2. The method according to claim 1, **characterised in that**
a. in the calibration operation, a liquid surface (16) and/or a cross-sectional area of the container (3) is determined, and/or **in that**
b. in the calibration operation, a container bottom (12) is determined, and/or **in that**
c. in the calibration operation, a container region (13) is scanned, or **in that** in the calibration operation, a container region (13) is scanned, whereby a plurality of background images of the container region (13) are recorded during scanning.

3. The method according to claim 1 or 2, **characterised in that**
a. in the calibration operation a liquid sample (5) is dispensed which contains a particle (8), and/or **in that**
b. the calibration operation is carried out when a sample carrier (15) having a plurality of containers (3) is inserted into a dispensing device (1), and/or **in that**
c. in the calibration operation, a liquid sample (5) is dispensed into at least one container (3) of a sample carrier (15) which comprises a plurality of containers (3).

4. The method according to claim 3, **characterised in that**
a. the container region (13) is scanned after dispensing the liquid sample (5), or **in that**
b. the container region (13) is scanned after dispensing the liquid sample (5), wherein a large number of images of the container region (13) are generated during scanning.

5. The method according to any one of claims 2 to 4, **characterised in that**
a. the container region (13) comprises a region from a container bottom (12) to a liquid surface (16), or **in that**
b. the container region (13) comprises a region from a container bottom (12) to an upper limit (17) which is arranged offset by a predetermined distance to a liquid surface (16).

6. The method according to claim 4 or 5, **characterised in that** the particle (8) is detected using the recorded images and the recorded background images.

7. The method according to any one of claims 1 to 6, **characterised in that** in a dispensing operation, the position of the particle (8), in particular contained in the dispensed liquid sample (5), in particular a height of the particle (8), is determined, in particular and that after a predetermined number of dispensing procedures the position of the particle (8) is determined or **in that** the position of the particle (8) is determined at each dispensing procedure.

8. The method according to claim 7, **characterised in that** it is checked whether the particle (8) is located in the partial volume region (7), in particular, and that a calibration operation is restarted if the particle (8) is located outside the partial volume region (7) and/or **in that** the partial volume region (7) to be scanned is enlarged if the particle (8) is located outside the partial volume region (7).

9. The method according to any one of claims 1 to 8, **characterised in that**
a. the number of particles (8) in the partial volume region (7) is determined, and/or in that
b. a liquid sample (5) is dispensed into a plurality of containers and the position of the particle (8) in each container is determined, wherein the partial volume region (7) is reduced if the particles (8) in the respective containers (3) have the same position or a position in a predetermined region.

10. A dispensing device (1) having
a dispenser (4) for dispensing a liquid sample (5) into a container (3) filled with liquid (2),
a detection device (6) for scanning a partial volume region (7) of the container (3) in order to detect a particle (8) located in the liquid sample (5), wherein the detection device (6) records a plurality of images, **characterised in that**
in the calibration operation, the detection device (6) detects a position of the particle (8), in particular a height of the particle (8), and
the detection device (6) determines an upper limit (9) and a lower limit (10) of the partial volume region (7) in a calibration operation preceding the dispensing procedure, wherein the upper limit (9) is arranged offset by a predetermined first distance (d1) and the lower limit (10) by a predetermined second distance (d2) from the position of the particle (8).

11. The dispensing device (1) according to claim 10, **characterised in that**
a. the dispensing device (1) comprises a control device (11) that initiates a dispensing procedure and/or that initiates scanning of the partial volume region (7) of the container (3), and/or **in that**
b. the container (3) is a component of a sample carrier (15) which comprises a plurality of containers (3), and/or **in that**
c. in the calibration operation, the detection device (6) determines a liquid surface (16) and/or a cross-sectional area of the container (3), and/or **in that**
d. in the calibration operation, the detection device (6) determines a container bottom (12), and/or **in that**
e. in the calibration operation, the detection device (6) scans a container region (13), or **in that**, in the calibration operation, the detection device (6) scans a container region (13), wherein a plurality of background images of the container region (13) are recorded during scanning, and/or **in that**
f. in the calibration operation of the dispenser (4), a liquid sample (5) is dispensed into the container (3), wherein the detection device (6) scans the container region (13) and records a plurality of images of the container region (13), in particular, and **in that** the detection device (6) detects the particle (8) using the recorded images and the recorded background images.

12. The dispensing device (1) according to claim 10 or 11, **characterised in that**
a. the control device (11) causes the position of the particle (8) to be determined after a predetermined number of dispensing operations, or **in that** the position of the particle (8) is determined during each dispensing operation, and/or **in that**
b. the detection device (6) checks whether the particle (8) is located in the partial volume region (7), and/or **in that**
c. the control device (11) causes a calibration operation to be restarted if the particle (8) is outside the partial volume region (7), and/or **in that**
d. the control device (11) causes the partial volume region (7) that is to be scanned to be enlarged when the particle (8) is located outside the partial volume region (7), and/or **in that**
e. the detection device (6) determines the number of particles (8) in the partial volume region (7) and/or **in that**
f. the dispenser (4) dispenses a liquid sample (5) into a plurality of containers and the detection device (6) determines the position of the particle (8) in the respective container (3), wherein the control device (11) causes the partial volume region (7) to be reduced when the particles (8) in the respective containers (3) have the same position or a position within a predetermined region.

13. A computer program comprising instructions which, when the program is executed by a computer, cause the computer to carry out the method according to any one of claims 1 to 9.

14. A data carrier on which the computer program according to claim 13 is stored, or a data carrier signal transmitting the computer program according to claim 13.

## Revendications

1. Procédé de détection d'une particule (8) dans un récipient (3) rempli de liquide (2), le procédé comprenant les étapes suivantes :
la distribution d'un échantillon liquide (5) dans le récipient (4),
balayage d'une partie de volume (7) du récipient (3) pour détecter une particule (8) située dans l'échantillon liquide (5), une pluralité d'images étant prises pendant le balayage, le procédé étant **caractérisé en ce que**
une limite supérieure (9) et une limite inférieure (10) de la partie de volume (7) sont déterminées lors d'une opération d'étalonnage précédant le processus de distribution, lors de l'opération d'étalonnage, une position de la particule (8), en particulier contenue dans l'échantillon liquide (5) distribué, en particulier une hauteur de la particule (8), étant déterminée et, **en ce que**, lors de l'opération d'étalonnage, il est déterminé que la limite supérieure (9) est décalée d'une première distance (d1) prédéterminée et la limite inférieure (10) d'une seconde distance(d2) prédéterminée par rapport à la position de la particule (8).

2. Procédé selon la revendication 1, **caractérisé en ce que**
a. lors de l'opération d'étalonnage, la surface du liquide (16) et/ou la section transversale du récipient (3) sont déterminées et/ou **en ce que**
b. lors de l'opération d'étalonnage, le fond d'un récipient (12) est déterminé et/ou **en ce que**
c. lors de l'opération d'étalonnage, une zone de récipient (13) est balayée, ou **en ce que**, lors d'une opération d'étalonnage, une zone de récipient (13) est balayés, une pluralité d'images d'arrière-plan de la zone de récipient (13) étant prises pendant le balayage.

3. Procédé selon la revendication 1 ou 2, **caractérisé en ce que**
a. lors de l'opération d'étalonnage, un échantillon liquide (5) qui comporte une particule (8) est distribué, et/ou **en ce que**
b. l'opération d'étalonnage est réalisée lorsqu'un porte-échantillon (15) comportant plusieurs récipients (3) est inséré dans un dispositif de distribution (1), et/ou **en ce que**
c. lors de l'opération d'étalonnage, un échantillon liquide (5) est distribué dans au moins un récipient (3) d'un porte-échantillon (15) qui comporte plusieurs récipients (3).

4. Procédé selon la revendication 3, **caractérisé en ce que**
a. la zone de récipient (13) est balayée après la distribution de l'échantillon liquide (5) ou **en ce que**
b. la zone de récipient (13) est balayée après la distribution de l'échantillon liquide (5), une pluralité d'images de la zone du récipient (13) étant générée lors du balayage.

5. Procédé selon l'une des revendications 2 à 4, **caractérisé en ce que**
a. la zone de récipient (13) comporte une surface allant du fond du récipient (12) à la surface du liquide (16) ou **en ce que**
b. la zone de récipient (13) comporte une zone allant du fond du récipient (12) à une limite supérieure (17) qui est décalée d'une distance prédéterminée par rapport à une surface du liquide (16).

6. Procédé selon la revendication 4 ou 5, **caractérisé en ce que** la particule (8) est détectée à l'aide des images et des images d'arrière-plan prises.

7. Procédé selon l'une des revendications 1 à 6, **caractérisé en ce que**, lors d'une opération de distribution, la position de la particule (8), en particulier contenue dans l'échantillon liquide (5) distribué, et en particulier la hauteur de la particule (8), est déterminée, en particulier et **en ce qu'**après un nombre prédéterminé de processus de distribution, la position de la particule (8) est déterminée ou **en ce que** la position de la particule (8) est déterminée à chaque processus de distribution.

8. Procédé selon la revendication 7, **caractérisé en ce qu'**il est vérifié si la particule (8) est située dans la partie de volume (7), en particulier et **en ce qu'**une opération d'étalonnage est redémarrée si la particule (8) est située en dehors de la partie de volume (7) et/ou **en ce que** la partie de volume (7) à balayer est agrandie lorsque la particule (8) est située en dehors de la partie de volume (7).

9. Procédé selon l'une des revendications 1 à 8, **caractérisé en ce que**
a. le nombre de particules (8) dans la partie de volume (7) est déterminé et/ou **en ce que**
b. chaque échantillon liquide (5) est distribué dans plusieurs récipients et la position de la particule (8) dans chaque récipient est déterminée, la partie de volume (7) étant ainsi réduite si les particules (8) dans chacun des récipients (3) ont la même position ou une position dans une zone prédéterminée.

10. Dispositif de distribution (1) comprenant
un distributeur (4) pour distribuer un échantillon liquide (5) dans un récipient (3) rempli de liquide (2),
un dispositif de détection (6) pour balayer une partie de volume (7) du récipient (3) afin de détecter une particule (8) située dans l'échantillon liquide (5), le dispositif de détection (6) prenant une pluralité d'images, **caractérisé en ce que**
lors de l'opération d'étalonnage, le dispositif de détection (6) détecte une position de la particule (8), en particulier la hauteur de la particule (8) et
le dispositif de détection (6) détermine une limite supérieure (9) et une limite inférieure (10) de la partie de volume (7) dans une opération d'étalonnage précédant le processus de distribution, la limite supérieure (9) étant décalée d'une première distance (d1) prédéterminée et la limite inférieure (10) d'une seconde distance (d2) prédéterminée par rapport à la position de la particule (8).

11. Dispositif de distribution (1) selon la revendication 10, **caractérisé en ce que**
a. le dispositif de distribution (1) comprend un dispositif de commande (11) qui initie un processus de distribution et/ou qui initie un balayage de la partie de volume (7) du récipient (3), et/ou **en ce que**
b. le récipient (3) fait partie d'un porte-échantillon (15) qui comprend la pluralité des récipients (3), et/ou **en ce que**
c. lors de l'opération d'étalonnage, le dispositif de détection (6) détermine une surface de liquide (16) et/ou une section transversale du récipient (3) et/ou **en ce que**
d. lors de l'opération d'étalonnage, le dispositif de détection (6) détermine le fond du récipient (12) et/ou **en ce que**
e. lors de l'opération d'étalonnage, le dispositif de détection (6) balaie une zone de récipient (13) ou **en ce que** lors de l'opération d'étalonnage le dispositif de détection (6) balaie une zone de récipient (13), une pluralité d'images d'arrièreplan de la zone de récipient (13) étant prises pendant le balayage, et/ou **en ce que**
f. lors de l'opération d'étalonnage du distributeur (4), un échantillon liquide (5) est distribué dans le récipient (3), le dispositif de détection (6) balayant ainsi la zone du récipient (13) et prenant une pluralité d'images de la zone du récipient (13), en particulier, et **en ce que** le dispositif de détection (6) détecte la particule (8) à l'aide des images et des images d'arrière-plan prises.

12. Dispositif de distribution (1) selon la revendication 10 ou 11, **caractérisé en ce que**
a. le dispositif de commande (11) permet de déterminer la position de la particule (8) après un nombre prédéterminé d'opérations de distribution, ou **en ce que** la position de la particule (8) est déterminée lors de chaque opération de distribution, et/ou **en ce que**
b. le dispositif de détection (6) vérifie si la particule (8) se trouve dans la partie de volume (7), et/ou **en ce que**
c. le dispositif de commande (11) permet le redémarrage d'une opération d'étalonnage si la particule (8) est située en dehors de la partie de volume (7), et/ou **en ce que**
d. le dispositif de commande (11) permet l'élargissement de la partie de volume (7) lorsque la particule (8) est située en dehors de la partie de volume (7), et/ou **en ce que**
e. le dispositif de détection (6) détermine le nombre de particules (8) dans la partie de volume (7) et/ou **en ce que**
f. le distributeur (4) distribue chaque échantillon liquide (5) dans plusieurs récipients et le dispositif de détection (6) détermine la position de la particule (8) dans le récipient respectif (3), dans lequel le dispositif de commande (11) permet la réduction de la partie de volume (7) lorsque les particules (8) dans les récipients respectifs (3) ont la même position ou une position dans une zone prédéterminée.

13. Programme informatique comprenant des instructions qui, lors de l'exécution du programme par un ordinateur, amènent celui-ci à mettre en œuvre le procédé selon l'une des revendications 1 à 9.

14. Support de données sur lequel est stocké le programme informatique selon la revendication 13, ou signal de support de données qui transmet le programme informatique selon la revendication 13.
